# EUROPÄISCHE PATENTSCHRIFT

(11) **EP 1 586 537 B1**
(45) Veröffentlichungstag und Bekanntmachung des Hinweises auf die Patenterteilung: **06.01.2010**
(21) Anmeldenummer: 05006549.9
(22) Anmeldetag: 24.03.2005
(51) Int. Cl.: C01B 33/107, C01B 33/02

(54) **Verfahren zur Herstellung von Trichlormonosilan**
Method for producing trichlorosilane
Procede de preparation de trichlorosilane

(30) Priorität: 08.04.2004 DE 102004017453
(43) Veröffentlichungstag der Anmeldung: 19.10.2005
(73) Patentinhaber: Wacker Chemie AG, 81737 München (DE)
(72) Erfinder: Pflügler, Bernhard, 84489 Burghausen (DE); Traunspurger, Gerhard, 84489 Burghausen (DE); Grünleitner, Walter, Dr., 84533 Haiming (DE)
(74) Vertreter: Potten, Holger

(56) Entgegenhaltungen:
- US-A- 5 063 040
- US-A- 5 164 138
- PATENT ABSTRACTS OF JAPAN Bd. 012, Nr. 446 (C-546), 24. November 1988 (1988-11-24) & JP 63 170210 A (TOA NENRYO KOGYO KK), 14. Juli 1988 (1988-07-14)

## Beschreibung

Die Erfindung betrifft ein Verfahren zur Herstellung von Trichlormonosilan aus teilchenförmigem Silicium und gasförmigem Chlorwasserstoff.

Die Bedarfsmenge an ultrareinem Silicium für die Halbleiterindustrie und die Photovoltaik-Industrie stiegen in den letzten Jahren sprunghaft. Aus den verschiedenen Herstellungswegen hat sich die Abscheidung aus Trichlorsilan mit Wasserstoff als kommerziell attraktive Variante herausgestellt. So werden 90% des im Halbleiterbereich eingesetzten Siliciums mit Hilfe von aufgereinigtem Trichlorsilan hergestellt. Die Herstellung von Trichlorsilan aus metallurgischem Silicium wird in Fließbettreaktoren durchgeführt. Dies wird z.B. in US-A-4,092,446 beschrieben. Dort wird ein Reaktor beschrieben, in dem ein Siliciumbett, bestehend aus Siliciumpartikeln, mit Chlorwasserstoff durchströmt wird. Der Chlorwasserstoff reagiert mit den Siliciumpartikeln zu Tetrachlorsilan und Trichlormonosilan und Wasserstoff. Dabei wird weder auf die im Reaktor notwendige noch auf die optimale Partikelgrößeverteilung zur Erreichung eines möglichst hohen Trichlormonosilangehalts im Produktgas eingegangen. Sowohl nicht umgesetzter Chlorwasserstoff als auch ein hoher Nebenanfall von Tetrachlorsilan erhöhen die Prozesskosten erheblich.

In Ullmanns Encyklopädie der technischen Chemie , Erscheinungsjahr 2002, wird das Herstellungsverfahren in solchen Fließbettreaktoren bei einer Temperatur im Reaktor bei 650 °C beschrieben. Der Chlorwasserstoff reagiert bei dieser Temperatur vorzugsweise mit den Siliciumpartikeln zu Trichlormonosilan und Wasserstoff.

In DE-A1-3938897 wird gezeigt, dass das Verhältnis Tetrachlorsilan : Trichlormonosilan von der im Reaktor gehaltenen Temperatur abhängig ist. Weiter wird aufgezeigt, dass mit einer Erhöhung der Homogenität der eingesetzten Siliciumpartikel der Anteil des Chlorwasserstoff-Gases im Produktgas nur noch 3% beträgt und man ein SiCl₄ ärmeres Produktes erhält. Laut DE-A1-3938897 ist es vorteilhaft, ein durch Gaszerstäubung von geschmolzenem Si erhaltenes Siliciumpulver, welches eine Partikelgrößenverteilung zwischen 1 und 1000 µm bzw. vorzugsweise zwischen 50 und 800 µm hat, zur Herstellung von Trichlormonosilan in einem Wirbelbettreaktor zu verwenden.

DE-C2-3239590 beschreibt im Gegensatz zu einem Fließbettverfahren ein Rührbettverfahren zur Herstellung von Trichlorsilan und Tetrachlorsilan. Dabei liegt das Silicium in Klumpenform vor.

Aus dem Patent UK 945.618 ist bekannt, Silicium-Körnungen mit einer Teilchengröße von 30 bis 500 µm, vorzugsweise 50 bis 200 µm zur Herstellung von Trichlormonosilan in einem Wirbelbettreaktor einzusetzen. Dieses käuflich erhältliche Material kann vor seiner Verwendung weiter aufgereinigt werden.

Aus US 2002/0151737 A1 (entspricht EP-A1-1 249 453) ist bekannt, Si-Staub zunächst in eine Flüssigkeit zu geben und dann erst in einen Reaktor (Müller-Rochow- oder Trichlormonosilan-Synthese) einzubringen. Dies Verfahren ist aufwendig, und das einzusetzende Siliciumpulver wird durch eine Mahlung auf die notwendige Feinheit gebracht.

Aufgabe der vorliegenden Erfindung war es, ein kostengünstiges Verfahren zur Herstellung von Trichlormonosilan zur Verfügung zu stellen.

Diese Aufgabe wird gelöst durch ein Verfahren, bei dem in einem Fließbettreaktor aus Siliciumpartikeln und Chlorwasserstoff die Siliciumpartikel mit dem Chlorwasserstoff umgesetzt werden, wobei als Siliciumpartikel ein Siliciumstaub mit einer maximale Korngröße von 80 µm eingesetzt wird, und der Siliciumstaub direkt in den Reaktor eingeschleust wird.

Siliciumstäube fallen bei der Herstellung von definierten Siliciumkornverteilungen z.B. für den Einsatz in der Methylchlorsilansynthese und Trichlorsilansynthese an. Dabei wird zunächst stückiges Silicium mit einer Kantenlänge von bis zu 0,5 m gebrochen. Nach dem Brechen wird das Silicium gemahlen und anschließend gesiebt oder gesichtet. So wird ein gemahlenes Silicium mit einer definierten Korngrößenverteilung hergestellt. Bei allen Verfahrensschritten (Brechen, Mahlen, Sieben und Sichten) wird anfallender Si-Staub abgesaugt. Dieser Staub wird erfindungsgemäß zur Herstellung von Trichlormonosilan verwendet. Dieser Staub wurde bisher entweder verworfen oder energieintensiv eingeschmolzen und wieder gemahlen. Beides ist mit Kosten verbunden, die durch das erfindungsgemäße Verfahren eingespart werden. Durch die Verwertung der Abfall-SiliciumStäube, die weltweit jährlich in großen Mengen anfallen, im erfindungsgemäßen Verfahren bietet dieses Verfahren einen großen wirtschaftlichen Vorteil. Auch Umarbeitungskosten oder Entsorgungskosten der Stäube fallen nicht mehr an.

Die Reaktion des metallischen Siliciums mit Chlorwasserstoff verläuft bekanntermaßen sehr rasch. Maßgebend hierfür ist die Oberfläche der eingesetzten Silciumpartikel. Der pro Volumeneinheit enthaltene Feststoff hat bei der Verwendung feinerer Körnung eine entsprechend größere Oberfläche. Daher ist zu erwarten, dass der Einsatz von Stäuben zu einer höheren Wärmetönung in der Wirbelschicht führen sollte und somit zu einer Senkung der Trichlormonosilan-Selektivität führt. Im Rahmen der vorliegenden Erfindung wurde dieser Effekt überraschenderweise jedoch nicht beobachtet. Vielmehr zeigten sich völlig unerwartet gegenteilige Effekte, die sogar zu einer Erhöhung der Trichlormonosilan-Selektivität führten. Es wurde nämlich festgestellt, dass durch Einsatz der genannten sehr feinen Si-Partikel, wie sie beim Zerkleinern von stückigem Silicium in beträchtlichen Mengen anfallen, in einem Trichlormonosilan-Reaktor bei der Herstellung von Trichlormonosilan durch Reaktion von Silicium-Partikeln mit Chlorwasserstoffgas ein Trichlormonosilan reicheres und zeitgleich ein Chlorwasserstoff armes Produktgas erhalten wird. Dadurch werden die Verfahrenskosten zur Herstellung von Trichlormonosilan deutlich gesenkt.

Der im erfindungsgemäßen Verfahren bevorzugt eingesetzte Siliciumstaub ist daher vorzugsweise ein Abfallstaub, wie er bei der Herstellung von definierten Siliciumkörnungen anfällt. Aufgrund der mit dieser Körnung zu erzielenden Verfahrensvorteile ist es jedoch ebenso möglich, die genannten Siliciumkörnungen gezielt herzustellen.

Durch den Einsatz dieses feinkörnigen Siliciumstaubs werden die Verfahrenskosten bei der Herstellung von Trichlormonosilan durch Reaktion der Siliciumteilchen mit Chlorwasserstoffgas ohne einen Katalysator, wie Kupfer, gesenkt, da ein Trichlormonosilan reicheres und ein Chlorwasserstoff ärmeres Produktgas erhalten wird. Die Selektivität Trichlormonosilan / Tetrachlorsilan ist stark temperaturabhängig. Daher ist die Wärmehaltung mittels Kühlung eine besondere Herausforderung beim erfindungsgemäßen Verfahren. Vorzugsweise wird das Verfahren bei einer Temperatur von 250 bis 600 °C, besonders bevorzugt bei einer Temperatur von 280 bis 400 °C, durchgeführt.

Vorzugsweise erfolgt die Zugabe von Chlorwasserstoff und Siliciumpulver im erfindungsgemäßen Verfahren in einem Molverhältnis von 4:1 bis 3:1. Besonders bevorzugt stöchiometrisch im Molverhältnis Chlorwasserstoff : Siliciumpulver = 3,1:1.

Der Druck im Reaktor beträgt während des erfindungsgemäßen Verfahrens vorzugsweise 0 bis 5 bar Überdruck, vorzugsweise 1 bar Überdruck. Der Quotient Wirbelbetthöhe : Reaktordurchmesser liegt bevorzugt zwischen 10:1 und 1:1, besonders bevorzugt bei 8:1 bis 2:1, insbesondere bevorzugt bei ca. 4:1.

Aus dem entstandenen Produktgas werden die kondensierbaren Anteile durch eine Tieftemperaturkondensation bei -40°C abgetrennt.

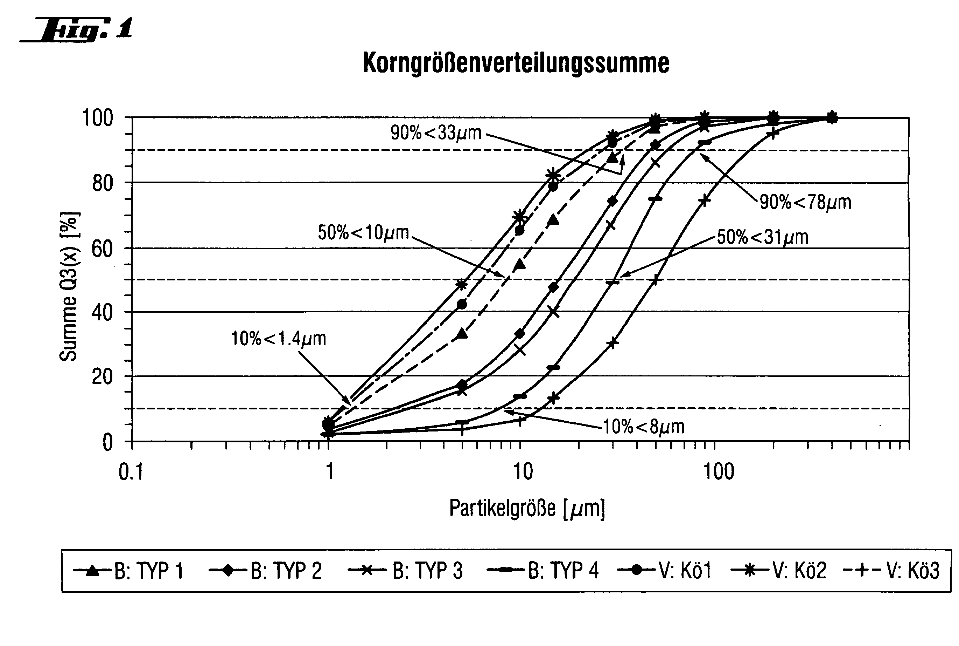

Fig. 1 zeigt die Korngrößenverteilungssummen der Beispiele und Vergleichsbeispiele.

Die folgenden Beispiele dienen der weiteren Erläuterung der Erfindung.

### Beispiel 1: Herstellung von Si-Körnungen

Handelsübliches Silicium (Eisengehalt 1,4 Gew.%, Aluminium 0,2 Gew.%, Calcium 0,015 Gew.%) wurde mit konventionellen Verfahren durch Zerkleinern, Mahlen und Sieben von Blockguß-Silicium in Gruppen mit unterschiedlichen Siliciumkorngrößenverteilungen verarbeitet. Die Zusammensetzung der Körnungen ist in Tab. 1 angegeben. (Kö 1 -3) Die unterschiedlichen Siliciumkorngrö-βenverteilungen wurden als Vergleichsbeispiele verwendet.

### Beispiel 2: Erstellen einer Basislinie (Vergleichsbeispiel)

Die Beispiele wurden in einem Wirbelbettreaktor durchgeführt, wie in Patent US 4092446 Fig. 12 ersichtlich.

Der Reaktor wurde mit Silicium einer standardmäßigen Korngrö-βenverteilung befüllt. Die Partikelgrößenverteilung war wie folgt: 10% der Teilchen < 100 *µ*m, 50% der Teilchen < 300 *µ*m und 90% der Teilchen < 500 *µ*m. (Standard).

Zunächst wurde das Siliciumbett mit N₂ gespült bis die Silicium Wirbelschicht ausgebildet war. Dabei wurde darauf geachtet, dass der Quotient Wirbelbetthöhe : Reaktordurchmesser bei ca. 4 lag. Das Wirbelbett wurde dann mit einer externen Beheizung auf eine Temperatur von 300°C gebracht. Diese Temperatur wurde mit Hilfe einer Kühlung über den gesamten Versuchszeitraum gehalten. Anschließend wurde Chlorwasserstoff und ein Siliciumpulver mit der o.g. Korngrößenverteilung stöchiometrisch 3:1 zugegeben. Die Höhe des Wirbelbettes blieb über den gesamten Versuchzeitraum konstant. Der Druck im Reaktor betrug über die Versuchszeit 1 bar Überdruck. Nach 48 h Reaktorlaufzeit wurde jeweils eine Flüssigkeitsprobe und gleichzeitig eine Gasprobe genommen. Die kondensierbaren Anteile des Produktgases wurden über eine Kühlfalle bei -40 °C kondensiert und die anfallende Flüssigkeit durch Gaschromatographie(GC) analysiert. Die Detektion erfolgte über einen wärmeleitfähigkeitsdetektor. Der nichtkondensierbare Anteil des Produktgases wurde mit einem Infrarot-Spektrometer (IR) auf nicht umgesetzten Chlorwasserstoff [Vol.%] hin analysiert. Aus jeweils zwei im Einstundentakt (nach 48 und 49h) genommenen Werten wurde der Mittelwert gebildet. Dabei wurde der Chlorwasserstoffgehalt im Restgas (Produktgas ohne die auskondensierten Anteile) mit 13,3 Vol% bestimmt, der Trichlormonosilangehalt im Kondensat wurde mit 71% gemessen.

### Beispiel 3:

Der in Beispiel 2 beschriebene Ablauf wurde nun mit verschiedenen Siliciumpulvern durchgeführt.
Bei den Pulvern Typ 1 bis 4 handelt es sich um Abfallpulver. Bei den Körnungen Kö 1 - 3 handelt es sich um Körnungen, die zu Vergleichszwecken hergestellt wurden. Die größten Partikel dieser Siliciumpulver hatten eine maximale Teilchengröße < 500 *µ*m.

Nach jedem Versuchslauf wurde der Reaktor vollständig entleert, neu mit Silicium befüllt und 48 h nach Reaktionsbeginn die Proben genommen.

Tabelle 1 nennt die Korngrößenverteilungen der Siliciumstäube (B: erfindungsgemäßes Beispiel, V: Vergleichsbeispiel) sowie die erzielten Ergebnisse.

**Tab. 1:**

| Pulver | Korngrößenverteilung | | | Umsatzgrad HCl [VOL%] | Trichlormonosilan-Selektivität |
|---|---|---|---|---|---|
| Standard | 10% < 100 µm | 50% < 300 µm | 90% < 500 µm | HCL:13,3% | Sitri 71% |
| B: TYP1 | 10% < 1,4 µm | 50% < 10 µm | 90 % < 33 µm | HCL:0,8%, | Sitri 87% |
| B: TYP2 | 10% < 2,2 µm | 50% < 16 µm | 90% < 49 µm | HCl:0,7%, | Sitri 88,5% |
| B: TYP3 | 10% < 2,8 µm | 50% < 20 µm | 90% < 60 µm | HCl:1,1% | Sitri 85,4% |
| B: TYP4 | 10% < 8 µm | 50% < 31 µm | 90% < 78 µm | HCl:0,8% | Sitri 87% |
| V: Kö 1 | 10% < 1,1 µm | 50% < 7 µm | 90% < 28 µm | HCl:9,2% | Sitri 78,2% |
| V: Kö 2 | 10% < 1,1 µm | 50% < 5 µm | 90% < 22 µm | HCl:8,3% | Sitri 77,2% |
| V: Kö 3 | 10% < 14 µm | 50% < 50 µm | 90% < 180 µm | HCl:7,5% | Sitri 78,2% |

Die Ergebnisse belegen, dass durch die Verwendung eines Si-Pulvers mit der erfindungsgemäßen Teilchengrößenverteilung eine deutliche Verbesserung des Herstellungsprozesses von Trichlormonosilan aus Silicium und Chlorwasserstoff erreicht wird. Die Prozessausbeute, das sind Umsatzgrad Chlorwasserstoff und Ausbeute Trichlormonosilan (Sitri in Tab. 1), steigt.

## Patentansprüche

1. Verfahren zur Herstellung von Trichlormonosilan, bei dem in einem Fließbett aus Silicium-Partikeln und Chlorwasserstoff die Silicium-Partikel mit dem Chlorwasserstoff in einem Fließbettreaktor umgesetzt werden, wobei als Siliciumpartikel ein Siliciumstaub mit einer maximalen Korngröße von 80 µm eingesetzt wird und der Siliciumstaub direkt in den Reaktor eingeschleust wird.

2. Verfahren gemäß Anspruch 1 **dadurch gekennzeichnet, dass** der Siliciumstaub als Abfallprodukt bei der Herstellung von definierten Siliciumkörnungen aus stückigem Silicium anfällt.

3. Verfahren gemäß Anspruch 2, **dadurch gekennzeichnet, dass** als Siliciumstaub ein Abfallstaub, der bei der Herstellung von speziellen Siliciumkornverteilungen für den Einsatz in der Methylchlorsilansynthese und Trichlorsilansynthese anfällt, eingesetzt wird.

## Claims

1. Process for preparing trichloromonosilane, in which, in a fluidized bed composed of silicon particles and hydrogen chloride, the silicon particles are reacted with the hydrogen chloride in a fluidized bed reactor, the silicon particles used being a silicon dust having a maximum particle size of 80 µm and the silicon dust being introduced directly into the reactor.

2. Process according to Claim 1, **characterized in that** the silicon dust is obtained as a waste product in the preparation of defined silicon particle size fractions from lump-form silicon.

3. Process according to Claim 2, **characterized in that** the silicon dust used is a waste dust which is obtained in the preparation of specific silicon particle size distributions for use in methylchlorosilane synthesis and trichlorosilane synthesis.

## Revendications

1. Procédé pour la préparation de trichloromonosilane, dans lequel, dans un réacteur à lit fluidisé on fait réagir dans un lit fluidisé de particules de silicium et d'acide chlorhydrique les particules de silicium avec l'acide chlorhydrique, en utilisant comme particules de silicium une poudre de silicium ayant une taille maximale de grain de 80 µm et on introduit directement la poudre de silicium dans le réacteur.

2. Procédé selon la revendication 1, **caractérisé en ce que** la poudre de silicium est produite en tant que déchet dans la production de produits de granulation de silicium à taille de grain définie à partir de silicium en morceaux.

3. Procédé selon la revendication 2, **caractérisé en ce qu'**on utilise comme poudre de silicium une poudre produite en tant que déchet dans la production de produits de granulation de silicium à taille de grain spéciale pour l'utilisation dans la synthèse du méthylchlorosilane et du trichlorosilane.
